# EUROPEAN PATENT APPLICATION

(11) **EP 1 587 247 A1**
(43) Date of publication of application: **19.10.2005**
(21) Application number: 05300282.0
(22) Date of filing: 14.04.2005
(51) Int. Cl.: H04L 12/24

(54) **Map navigation with breadcrumb buttons**

(30) Priority: 16.04.2004 US 825171
(71) Applicant: ALCATEL, 75008 Paris (FR)
(72) Inventor: Martineau, Terrence, Ottawa, Ontario K1N 8N9 (CA); Kiesekamp, David, Ottawa, Ontario K2A 2B4 (CA); Shahid, Syed Farhan, Nepean, Ontario K2B 6M7 (CA); Canton, Raymond, Ottawa, Ontario K1L 8L9 (CA)
(74) Representative: Hervouet, Sylvie

(57) **Abstract**

Apparatus and method are provided for displaying network object hierarchy information within a network management tool. When displaying information about a network object, the network management tool also displays a row of buttons representing different layers within the network hierarchy. A button representing the root object, or entire network, is displayed at one end, and a button representing the network object currently being displayed is displayed at the other end. Arranged between these are intermediate buttons representing network objects within the hierarchy between the root object and the network object being displayed, the intermediate buttons being ordered in accordance with the position within the hierarchy of the corresponding network objects. The invention allows an operator to quickly see for which point in the network hierarchy he or she is currently seeing network information.

## Description

### Field of the invention

The invention relates to network management systems within telecommunication networks, and more particularly to graphical user interfaces of such systems.

### Background of the invention

In network management tools used in management of hierarchical telecommunication networks, operators work within a network management map display to drill down into layers of network maps to work with or identify network elements. In large networks with many layers, operators can lose track of what location in the network map they are currently viewing. One approach is to use a tree-based display to list previously visited levels. However, such displays use a significant amount of space on the network management map display. Another solution would be to maintain a historical listing of network elements and levels visited, analogously to web browser history listings. However, a historical listing is merely a sequential listing made over time of levels and network elements visited. As different levels are visited repeatedly, such a list may quickly become unworkable.

An interface which allowed operators to easily determine where in the network hierarchy they currently are, and to navigate quickly to higher levels within the hierarchy, would improve the efficiency of hierarchical operations.

### Summary of the invention

In accordance with one aspect of the invention, a method is provided for presenting network object hierarchy information in a network management tool, the network management tool being used in managing a communication network having a hierarchy of network objects. Status information of a displayed network object is displayed on a terminal, the displayed network object having at least one higher-level network object within the hierarchy. An ordered series of buttons is displayed on the terminal, each button corresponding to a network object within the hierarchy and being ordered according to a position within the hierarchy of the corresponding network object. The series of buttons includes at least a displayed network object button corresponding to the displayed network object. On each button, at least a portion of a label indicating the corresponding network object is displayed. A new displayed network object is designated by selecting a network object displayed in the status information or by selecting a button.

The methods may be carried out as part of a network management tool. The methods may be stored as instructions on a computer-readable medium, to be executed by a computer processor.

The methods of the present invention allow an operator of a network management tool to tell at a glance where in the network object hierarchy he or she is currently looking. The breadcrumb buttons indicate the higher levels within the hierarchy, up to the root network object, and allow the operator to quickly select a higher-level network object to move back up the hierarchy.

### Brief description of the drawings

The features and advantages of the invention will become more apparent from the following detailed description of the preferred embodiment(s) with reference to the attached figures, wherein:
FIG. 1 is a portion of a network management window showing an example breadcrumb bar according to one embodiment of the invention;
FIG. 2 is a portion of the network management window of FIG. 1 in which the breadcrumb bar includes truncated network object names; and
FIG. 3 is a portion of the network management window of FIG. 1 in which buttons have been clipped from the breadcrumb bar.

It will be noted that in the attached figures, like features bear similar labels.

### Detailed description of the embodiments

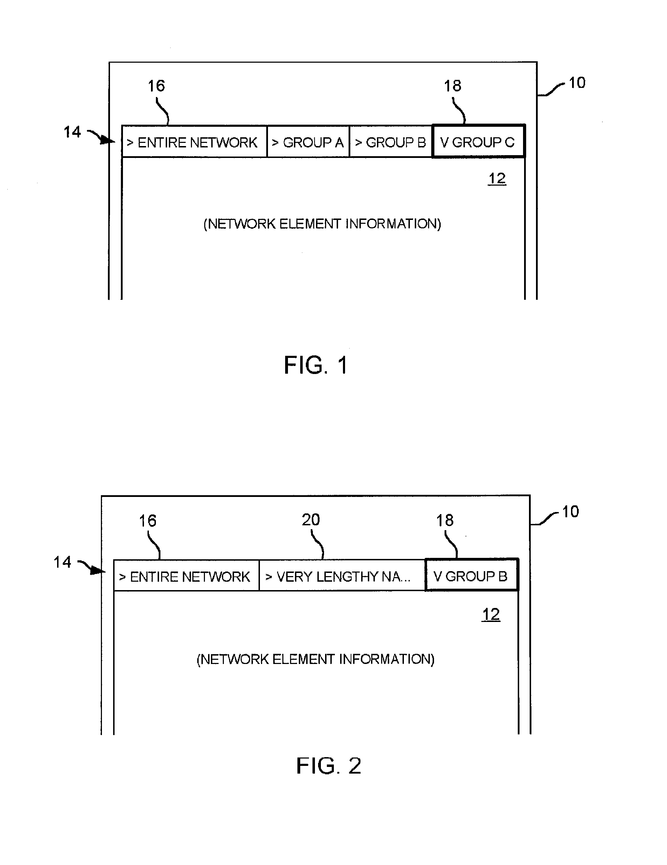

A network management tool displays a graphical user interface on a computer display device, and allows an operator to interact with a network management system. The network management tool includes instructions in the form of software for displaying the graphical user interface. The software may be stored on a computer-readable medium. Referring to FIG. 1, a portion of a window 10 displayed as part of the network management system according to one embodiment of the invention is shown. The window 10 includes an information region 12 for displaying information concerning a currently displayed network object. The window also includes a breadcrumb bar 14 for displaying one or more breadcrumb buttons. Each breadcrumb button is selectable by the operator, such as by using a mouse to click on the button.

The currently displayed network object is part of a hierarchy of network objects within a network. At the top of the hierarchy is a root object, typically representing the entire network. Each breadcrumb button corresponds to a network object, which may be a group of network elements, within the hierarchy. Each breadcrumb button has an associated label, which indicates to which network object the breadcrumb button corresponds. At least a portion of the label is displayed on each breadcrumb button.

The breadcrumb buttons on the breadcrumb bar include a root button corresponding to the root object. The breadcrumb buttons also include a displayed network object button corresponding to the currently displayed network object. Of course, if the currently displayed network object is the root object, then only one breadcrumb button will be displayed. The breadcrumb buttons may also include one or more intermediate buttons. Each intermediate button corresponds to an intermediate network object, located between the currently displayed network object and the root object in the network hierarchy. If the currently displayed network object is the root object or if the currently displayed network object is one level below the root object within the network hierarchy, there will be no intermediate network objects and hence no intermediate buttons.

Broadly then, the breadcrumb bar includes the root button corresponding to the root object, the displayed network object button corresponding to the currently displayed network object (which may be the same as the root button and the root object respectively), and at least one intermediate button if there is as least one intermediate object between the root object and the currently displayed network object, each intermediate button corresponding to an intermediate object. For the purposes of clarity, it will be assumed in the description that follows that there is at least one intermediate object.

The breadcrumb buttons are ordered within the breadcrumb bar according to the respective positions of the corresponding network objects within the network hierarchy. The root button is located at one end of the breadcrumb bar, preferably at the left end. The displayed network object button is located at the other end of the breadcrumb bar, preferably at the right end. The intermediate buttons are arranged such that as the breadcrumb bar is traversed from the root button to the displayed network object button, the corresponding network objects are located successively further from the root object within the network hierarchy. If the root button is at the left end of the breadcrumb bar, then each breadcrumb button will correspond to a network object higher in the hierarchy than the network objects corresponding to breadcrumb buttons to the right of the breadcrumb button. Turning to the example breadcrumb bar 14 shown in FIG. 1, network object Group A is higher than network object Group B within the hierarchy, and network object Group B is higher than network object Group C within the hierarchy.

When the operator selects a breadcrumb button, a new currently displayed network object is designated. The operator may also select a new currently displayed network object by other means, such as by clicking on icons within the information region 12. When the operator selects a new currently displayed network object, network object information corresponding to the new currently displayed network object is displayed within the information region 12, and the breadcrumb bar 14 is redrawn. The ordering of the breadcrumb buttons is based entirely on the relative positions of the corresponding network objects within the hierarchy, and does not depend on the order in which the network objects have been selected by an operator. The example breadcrumb bar 14 in FIG. 1 would have the same appearance regardless of which network objects had been selected prior to selecting network object Group C.

The appearance of the breadcrumb buttons will now be discussed with respect to the preferred embodiment of the invention. As shown in FIG. 1, the breadcrumb buttons are arranged across the top of the information region 12, with the root button 16 at the left and the displayed network object button 18 at the right. This allows an operator to determine the position of the currently displayed network object within the hierarchy quickly and intuitively. The displayed network object button 18 is highlighted or marked as being "pressed". Each label includes a name of the corresponding network object. Each label also includes a '>' symbol to indicate that the buttons are ordered. However, the '>' symbol of the displayed network object button 18 is rotated to point downwards, so as to indicate that the corresponding network object is the currently displayed network object.

If there are many intermediate buttons, or if a name of a network object associated with one of the buttons is very long, there may not be sufficient room to display all of the labels in their entirety. In such a case one or more of the labels is truncated and, if the size of the button permits, appended with ellipses. Referring to FIG. 2, an example breadcrumb bar is shown in which one of the breadcrumb buttons 20 displays a truncated label. When the operator passes the cursor over a breadcrumb button displaying a truncated label, the full name of the corresponding network object is displayed in a transient window for as long as the cursor is located over the breadcrumb button.

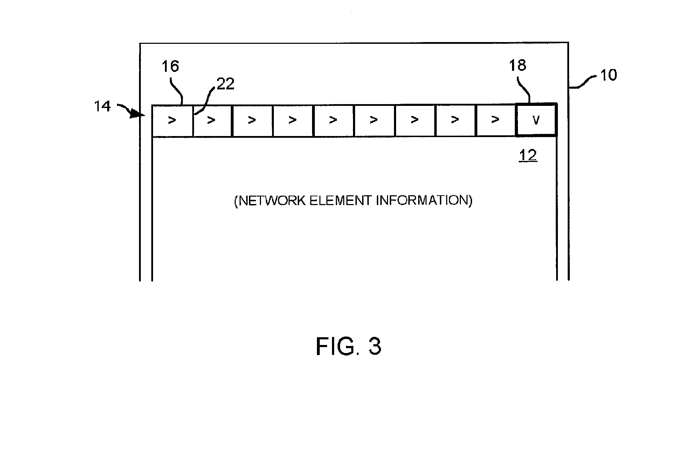

The breadcrumb buttons have a minimum width, for example defined so as to be able to display the '>' symbol. If there are so many intermediate buttons that the number of buttons multiplied by the minimum width is longer than the length of the breadcrumb bar, then the extra breadcrumb buttons will be removed and not all intermediate network objects will be represented on the breadcrumb bar. This clipping 22 occurs immediately to the right of the root button. The breadcrumb bar will include the root button 16, the displayed network object button 18, and as many intermediate buttons as will fit within the breadcrumb bar, the intermediate buttons corresponding to those network objects progressively higher within the hierarchy than the currently displayed network object. Referring to FIG. 3, an example breadcrumb bar is shown in which the root button 16, the displayed network object button 18, and intermediate buttons corresponding to the eight layers immediately above the currently displayed network object within the hierarchy, are displayed. Each label has been truncated to only include the '>' or 'V' symbol.

As an alternative to displaying the '>' symbol as part of the label, the breadcrumb buttons may display icons representing respective types of equipment of the corresponding network objects. This allows the operator to quickly identify objects within the network hierarchy.

The embodiments presented are exemplary only and persons skilled in the art would appreciate that variations to the embodiments described above may be made without departing from the spirit of the invention. For example, different icons or symbols can be displayed by the buttons, or different forms of name truncation. The buttons may be arranged vertically or horizontally, anywhere within the window, as long as the buttons are ordered according to the position within the hierarchy of the corresponding network objects. The scope of the invention is solely defined by the appended claims.

## Claims

1. A method of presenting network object hierarchy information in a network management tool, the network management tool for use in managing a communication network having a hierarchy of network objects, the method comprising the steps of:
displaying status information of a displayed network object on a terminal, the displayed network object having at least one higher-level network object within the hierarchy;
displaying an ordered series of a plurality of buttons on the terminal, each button corresponding to a network object within the hierarchy and being ordered according to a position within the hierarchy of the corresponding network object, the series including at least a displayed network object button corresponding to the displayed network object;
displaying on each button at least a portion of a label indicating the corresponding network object; and
designating a new displayed network object by selecting a network object displayed in the status information or by selecting a button.

2. The method of claim 1 wherein the ordered series includes a root button corresponding to a root object of the hierarchy.

3. The method of claim 2 wherein a maximum number of buttons are displayed, and wherein if the number of network objects between the root object and the displayed network object, inclusive, within the hierarchy exceeds the maximum number of buttons, displaying a number of buttons equal to the maximum number of buttons including the root button, the displayed network object button, and buttons corresponding to network objects progressively higher than the displayed network object within the hierarchy.

4. The method of claim 3 wherein the buttons are arranged along a horizontal row above the status information, with the root button at the left and the displayed network object button at the right.

5. The method of claim 1 comprising the further steps of:
monitoring for a position of a cursor on the terminal;
monitoring for the position of the cursor coinciding with a button for which only a portion of a label is displayed; and
while the position of the cursor coincides with a button for which only a portion of a label is displayed, displaying the label in its entirety.

6. A computer-readable medium having instructions for presenting network object hierarchy information as part of a network management tool, the network management tool for use in managing a communication network having a hierarchy of network objects, the computer-readable medium comprising:
instructions for displaying status information of a displayed network object on a terminal, the displayed network object having at least one higher-level network object within the hierarchy;
instructions for displaying an ordered series of a plurality of buttons on the terminal, each button corresponding to a network object within the hierarchy and being ordered according to a position within the hierarchy of the corresponding network object, the series including at least a displayed network object button corresponding to the displayed network object;
instructions for displaying on each button at least a portion of a label indicating the corresponding network object; and
instructions for designating a new displayed network object upon selection of a network object displayed in the status information or upon selection of a button.

7. The computer-readable medium of claim 6 wherein the ordered series includes a root button corresponding to a root object of the hierarchy.

8. The computer-readable medium of claim 7 wherein the instructions for displaying an ordered series of buttons comprise instructions for displaying a maximum number of buttons, and wherein if the number of network objects between the root object and the displayed network object, inclusive, within the hierarchy exceeds the maximum number of buttons, displaying a number of buttons equal to the maximum number of buttons including the root button, the displayed network object button, and buttons corresponding to network objects progressively higher than the displayed network object within the hierarchy.

9. The computer-readable medium of claim 8 wherein the instructions for displaying an ordered series of buttons comprise instructions for displaying the buttons along a horizontal row above the status information, with the root button at the left and the displayed network object button at the right.

10. The computer-readable medium of claim 6 further comprising:
instructions for monitoring for a position of a cursor on the terminal;
instructions for monitoring for the position of the cursor coinciding with a button for which only a portion of a label is displayed; and
instructions for displaying a label in its entirety while the position of the cursor coincides with a button for which only a portion of the label is displayed.
